# EUROPÄISCHE PATENTSCHRIFT

(11) **EP 2 991 082 B1**
(45) Veröffentlichungstag und Bekanntmachung des Hinweises auf die Patenterteilung: **06.06.2018**
(21) Anmeldenummer: 15177187.0
(22) Anmeldetag: 17.07.2015
(51) Int. Cl.: H01B 7/29, H01B 7/32, B60L 11/18

(54) **UMSPRITZER STECKER IN SCHICHTBAUWEISE FÜR ELEKTROAUTOS**
SPRAYER PLUG IN STRATIFIED CONTRUCTIONS FOR ELECTRIC AUTOMOBILES
CONNECTEUR SURMOULE STRUCTURE EN COUCHES POUR VEHICULES ELECTRIQUES

(30) Priorität: 29.08.2014 DE 102014012576
(43) Veröffentlichungstag der Anmeldung: 02.03.2016
(73) Patentinhaber: Heidelberger Druckmaschinen AG, 69115 Heidelberg (DE)
(72) Erfinder: Krüger, Michael, 68535 Edingen-Neckarhausen Baden-Württemberg (DE); Reiter, Josef, 69124 Eppelheim Baden-Württemberg (DE); Schulz, Andreas, 69123 Heidelberg Baden-Württemberg (DE); Wolf, Thomas, 69123 Heidelberg Baden-Württemberg (DE)

(56) Entgegenhaltungen:
- DE-A1- 4 134 556
- DE-A1-102012 200 523
- US-A1- 2010 238 020

## Beschreibung

Die vorliegende Erfindung betrifft eine Vorrichtung zum Leiten elektrischer Energie mittels eines elektrischen Leiters, welcher von wenigstens einer elektrisch isolierenden zweiten Schicht umgeben ist, sowie mit wenigstens einem Temperatursensor zur Erfassung der Temperatur des elektrischen Leiters, wobei der Temperatursensor zwischen dem elektrischen Leiter und der elektrisch isolierenden zweiten Schicht angeordnet ist.

Derartige Vorrichtungen zum Leiten elektrischer Energie kommen z. B. bei Kabeln bzw. elektrischen Steckverbindungen zum Laden von Elektroautos zum Einsatz. Zum Laden eines Elektroautos ist es notwendig, in relativ kurzer Zeit eine große elektrische Ladung auf die Batterie des Elektroautos zu übertragen. Um die Zeitspanne zum Laden gering zu halten, muss die Ladeleistung entsprechend groß sein, d. h. in relativ kurzer Zeit muss viel elektrische Ladung auf die Batterie übertragen werden. Dies bedingt einen entsprechend hohen Ladestrom, da die Zeitdauer für den Ladevorgang proportional mit der Erhöhung des Ladestroms sinkt. Ein hoher Ladestrom verursacht allerdings entsprechende Erwärmungen im elektrischen Leiter zum Übertragen der elektrischen Energie in den Akku des Elektroautos. Dieses Problem erfasst dabei im Wesentlichen das Ladekabel sowie die elektrische Steckverbindung, mit der das Ladekabel an das Elektroauto angestöpselt wird. Das Ladekabel und der Ladestecker der elektrischen Steckverbindung dürfen eine maximal zulässige Temperatur nicht überschreiten, da ansonsten das Bedienpersonal gefährdet sein könnte, denn es kann zu einer Überhitzung kommen, welche die Ladeeinrichtung zerstört, und es können Folgeschäden bis hin zur Brandgefahr auftreten. Wenn die Steckverbindung auf Grund von Korrosion in schlechtem Zustand ist, erhöht sich die Abwärme auf Grund des erhöhten elektrischen Widerstands in der Steckverbindung noch deutlich.

Aus diesem Grund sind aus dem Stand der Technik DE 10 2012 200 523 A1 ein System und ein Verfahren bekannt, mit denen die thermische Erfassung und Steuerung eines Wandsteckers ermöglicht wird, so dass in einem Ladesystem für Elektroautos die Belastung gemäß einer erfassten Temperatur gesteuert werden kann. Das System ist dabei so ausgelegt, dass die Temperatur an einer Schnittstelle zwischen dem Ladesystem und einer Energiequelle bestimmt wird. Die Temperatur wird dabei von einem Temperatursensor erfasst, der in einer Steckerbaugruppe oder in einem anderen Gehäuse oder in einer Leitung enthalten ist, die zum Verbinden des Ladesystems mit der Energiequelle verwendet werden. Im Stand der Technik wird vorgeschlagen, dass der Temperatursensor und der Teil des spannungsführenden und neutralen Steckkontakts, der sich nicht nach außen erstreckt, in einem Gehäuse aus Spritzguss umspritzt wird. Als Temperatursensor werden Bauteile mit negativen Temperaturkoeffizienten (NTC) oder Bauteile mit positiven Temperaturkoeffizienten (PTC) vorgeschlagen. Auf diese Art und Weise kann die Temperatur in der Steckerbaugruppe erfasst werden und der Ladevorgang kann in Abhängigkeit der erfassten Temperatur so geregelt werden, dass eine vorgegebene Temperatur nicht überschritten wird.

Die Patentanmeldung US 2010/0238020 A1 zeigt eine Sensoranordnung zur Temperaturüberwachung für elektrische Leiter, wobei die Sensoranordnung eine Röhre und mehrere Sensorsonden aufweist, welche über die gesamte Länge der Röhre voneinander beabstandet sind. Die Sensorsonden sind über Signaldrähte verbunden, wobei die Signaldrähte gleichzeitig elektrische Energie übertragen. Jede Sensorsonde beinhaltet außerdem einen Halbleiter-Sensorchip und einen Halbleiter-Kommunikations-Chip. Die Sensoranordnung mit der Röhre ist dabei innerhalb eines Stromkabels angeordnet, wobei das Stromkabel mehrere Stromleiter aufweist. Diese Stromleiter umfassen jeweils einen Leiterdraht, welcher von einer Isolationsschicht umgeben ist. Dies bedeutet, dass in allen Anordnungen die Sensoranordnung mit der Röhre von den stromförmigen Leiterdrähten durch eine elektrische Isolationsschicht beabstandet und getrennt ist und dass die Sensoranordnungen sich außerhalb der Isolationsschicht befinden. Dies führt dazu, dass die Sensoranordnungen um die gesamte Dicke der Isolationsschicht der Leiterdrähte von diesen Leiterdrähten beabstandet sind und somit nicht nahe dem Strom führenden, Hitze ausstrahlenden Leiterdraht angeordnet sein können.

Aus der Offenlegungsschrift DE 41 34 556 A1 geht eine elektrische Starkstromleitung mit integriertem linienförmigen Temperatursensor hervor, welcher zur Selbstüberwachung und Selbstschutz eines elektrisch unabgesicherten Starkstromleitungsabschnitts vor allem in Schienenfahrzeugen genutzt wird. Dabei weist eine Starkstromleitung einen stromführenden Leiter auf, welcher von einer Isolierhülle umgeben ist. Um die Isolierhülle herum ist eine Schutzhülle angeordnet. Zwischen der Schutzhülle und der Isolierhülle sind zwei voneinander isolierte, dünne flexible Hilfsleiter wendelförmig angeordnet, welche temperaturabhängig ihre elektrische Leitfähigkeit ändern. Diese dünnen flexiblen Hilfsleiter weisen weiterhin eine eigene Isolierung auf. Durch die flexiblen Hilfsleiter wird ein Signalstrom geleitet, bei dessen Unterbrechung der Stromfluss durch die Starkstromleitung abgeschaltet wird. Dies geschieht dadurch, dass bei übermäßiger Erwärmung der Starkstromleitung die Hilfsleiter durchschmelzen und somit den Signalstrom unterbrechen.

Die Lösung aus dem Stand der Technik mit dem Temperatursensor im Steckergehäuse hat jedoch den Nachteil, dass der Temperatursensor nicht nahe genug am elektrischen Leiter angeordnet ist und deshalb die Erwärmung des elektrischen Leiters nicht korrekt bzw. verzögert erfasst.

Es ist daher Aufgabe der vorliegenden Erfindung, eine Vorrichtung zum Leiten elektrischer Energien mittels eines elektrischen Leiters, welcher von wenigstens einer elektrisch isolierenden zweiten Schicht umgeben ist, sowie mit wenigstens einem Temperatursensor zur Erfassung der Temperatur des elektrischen Leiters, wobei der Temperatursensor zwischen dem elektrischen Leiter und der elektrisch isolierenden zweiten Schicht angeordnet ist, zu schaffen, welche eine zuverlässig erfolgende Erfassung der Temperatur des elektrischen Leiters erlaubt.

Diese Aufgabe wird erfindungsgemäß durch Patentanspruch 1 gelöst, vorteilhafte Ausgestaltungen der Erfindung ergeben sich aus den Unteransprüchen und den Zeichnungen sowie der Beschreibung.

Erfindungsgemäß ist vorgesehen, dass im Zwischenraum zwischen der elektrisch isolierenden zweiten Schicht und dem elektrischen Leiter eine elektrisch isolierende und thermisch leitende erste Schicht vorhanden ist und dass der Temperatursensor im Bereich dieser elektrisch isolierenden und thermisch leitenden ersten Schicht angeordnet ist. Dies bedeutet, dass der Temperatursensor und der elektrische Leiter mittels der elektrisch isolierenden und thermisch leitenden ersten Schicht wärmeleitend verbunden sind, so, dass die Wärme vom elektrischen Leiter möglichst schnell und unbeeinflusst auf den Temperatursensor übertragen wird. Auf diese Art und Weise wird sichergestellt, dass Temperaturveränderungen im elektrischen Leiter weitgehend ungeschmälert und zeitlich unverzögert beim Temperatursensor ankommen, so dass die Temperaturveränderungen im elektrischen Leiter vom Temperatursensor zuverlässig erfasst werden können.

Dies stellt einen erheblichen Vorteil gegenüber Lösungen nach dem Stand der Technik dar, wo der Temperatursensor mangels einer thermisch leitenden Verbindung zwischen Temperatursensor und elektrischem Leiter nur sehr gedämpft auf die Erwärmung des elektrischen Leiters reagiert. Zudem kann durch die genauere Abbildung der tatsächlichen Temperatur durch den Temperatursensor der Nutzbereich vergrößert werden, da auf Grund der verbesserten Dynamik der Abstand zu kritischen Grenzen wie z.B. maximal zulässiger Temperatur verringert werden kann. Dies ist bedingt durch die schnellere Reaktionszeit auf Temperaturänderungen und die deutlich höhere Amplitude.

Die vorliegende Erfindung hat weiterhin den Vorteil, dass insbesondere am Aufbau der Vorrichtung, d. h. des Kabels zum Leiten elektrischer Energie oder des Steckers der Steckverbindung nichts geändert werden muss, da der elektrische Leiter unverändert bleibt und der Temperatursensor weiterhin elektrisch isoliert vom elektrischen Leiter angebracht ist. Dies wird dadurch bewirkt, dass die thermisch leitende erste Schicht zusätzlich elektrisch isolierend ausgeführt ist. Dies hat zur Folge, dass aufgrund des unveränderten Layouts der Steckverbindung und des Kabels die Abnahmeprozedur zur Erfüllung der Normen für Elektroautos wesentlich verkürzt und damit kostengünstiger wird. Die erfindungsgemäße Vorrichtung eignet sich insbesondere zur Ausbildung eines elektrischen Steckers zum Aufladen von Elektroautos, welcher die Sicherheitsanforderungen für Elektroautos erfüllen muss.

In einer ersten Ausgestaltung der Erfindung ist vorgesehen, dass um die elektrisch isolierende zweite Schicht und die elektrisch isolierende und thermisch leitende erste Schicht eine äußere dritte Schicht herum angeordnet ist. Diese dritte Schicht wird bevorzugt im Spritzgussverfahren aufgebracht, so dass auf diese Art und Weise schnell und preiswert ein Stecker für Ladevorrichtungen für Elektroautos aus Kunststoff hergestellt werden kann. Auf diese Art und Weise kann auch das äußere Design des Steckers leicht variiert werden, in dem einfach die äußere dritte Schicht gemäß den Designvorgaben im Spritzgussverfahren aufgebracht wird. Da die äußere dritte Schicht sich außerhalb der elektrisch isolierenden zweiten Schicht und der elektrisch isolierenden und thermisch leitenden ersten Schicht befindet, gelten für die äußere dritte Schicht keine speziellen Anforderungen hinsichtlich der elektrischen Durchschlagsfestigkeit.

Vorteilhafterweise ist außerdem vorgesehen, dass die elektrisch isolierende zweite Schicht zusätzlich auch thermisch isolierend ist. Da die elektrisch isolierende und thermisch leitende erste Schicht die Temperatur vom elektrischen Leiter zum Temperatursensor leitet, besteht die Gefahr, dass die Wärme von dieser thermisch leitenden ersten Schicht auch ungeschmälert auf die zweite elektrisch isolierende Schicht übertragen wird. Dies wiederum bedeutet, dass die Wärme auch nach außen auf die dritte Schicht und damit das Gehäuse der Steckverbindung übertragen werden kann. Um ein Erwärmen des Gehäuses der Steckverbindung und damit der äußeren dritten Schicht zu minimieren, ist erfindungsgemäß vorgesehen, dass die elektrisch isolierende zweite Schicht zusätzlich auch thermisch isolierend ist. Dadurch wird eine Wärmeübertragung von der thermisch leitenden ersten Schicht auf die elektrisch isolierende zweite Schicht vermindert bzw. unterbunden, so dass sich das äußere der Steckverbindung nicht oder nur wenig aufheizt. Die elektrisch isolierende und wärmeisolierende zweite Schicht sorgt dafür, dass die durch den Steckkontakt in die erste Schicht geleitete Wärmeenergie in der ersten Schicht konzentriert wird und größtenteils nicht nach außen abgeleitet wird. So kann auf Grund der konzentrierten Wärmenergie am Sensor das System deutlich schneller reagieren. Des Weiteren kann die entstehende Wärme weitgehend von der äußeren dritten Schicht ferngehalten werden, so dass ein den Stecker berührender Benutzer besser vor thermischen Einwirkungen geschützt ist.

Des Weiteren ist vorgesehen, dass der Temperatursensor ein PTC-Element oder NTC-Element ist. Dabei wird bevorzugt ein PTC-Element verwendet, da dieses drahtbruchsicher ist, eine hohe Ansprechdynamik aufweist und zudem auch einfach zwei Temperatursensoren in einer Reihenschaltung auswertbar sind.

Vorteilhafterweise ist außerdem vorgesehen, dass die elektrisch isolierende und thermisch leitende erste Schicht aus einem aushärtenden Fluid, insbesondere Gap-Filler 4000, besteht. Durch die Verwendung eines aushärtenden Fluids kann die erste elektrisch isolierende und thermisch leitende Schicht leicht hergestellt werden, in dem das Fluid z. B. um die Steckkontakte und den elektrischen Leiter eines Steckers herumgegossen wird und dann aushärtet. Weiterhin kann vor dem Aushärten der benötigte Temperatursensor eingebracht werden, welcher beim Aushärten dann in der ersten elektrisch isolierenden und thermisch leitenden Schicht fixiert wird. Ein entsprechendes aushärtendes Fluids wie z. B. Gap-Filler 4000, welches ein Thermofluid ist, kann von der Fa. Bergquist bezogen werden. Es können auch andere aushärtende Fluide z.B. nach dem Zweikomponentenprinzip verwendet werden, deren Komponenten bei Erwärmung oder durch den Einfluss von Sauerstoff reagieren und aushärten, derartige Füllfluide können z.B. von der Fa. Dr. Müller in Ahlhom bezogen werden.

In einer anderen Ausgestaltung der Erfindung ist vorgesehen, dass die elektrisch isolierende und thermisch leitende erste Schicht aus einem Wärmeleitband, insbesondere einem Wärmeleitband aus Gap-Pad 5000 Material besteht. In diesem Fall ist der elektrische Leiter von einem Wärmeleitband umgeben, welches die Wärme des elektrischen Leiters auffängt. Gleichzeitig ist der Temperatursensor innerhalb des Wärmeleitbands angeordnet und mit dem Wärmeleitband kontaktiert, so dass die vom Wärmeleitband aufgenommene Wärme an den Temperatursensor übertragen wird. Auf diese Weise ist es ebenfalls möglich, so viel und so schnell wie möglich die Wärme des elektrischen Leiters über das Wärmeleitband an den Temperatursensor zu übertragen, um so eine möglichst schnelle und genaue Erfassung von Temperaturänderungen des elektrischen Leiter durch den Temperatursensor zu ermöglichen. Das Wärmeleitband besteht dabei aus einem SIL-PAD-Material, welches unter der Bezeichnung Gap-Pad 5000 ebenfalls von der Fa. Bergquist bezogen werden kann.

In einer weiteren Ausgestaltung der Erfindung ist vorgesehen, dass der Temperatursensor zusätzlich eine eigene elektrische Isolierung aufweist. Diese elektrische Isolierung des Temperatursensors kann aus einem Schrumpfschlauch bestehen, der ebenfalls gut wärmeleitend ist, um die Dynamik des Temperatursensors nicht zu beeinträchtigen. Die Verwendung eines bereits elektrisch isolierten Temperatursensors erleichtert die Platzierung des Sensors bei der Herstellung der Steckverbindung in der ersten elektrisch isolierenden und thermisch leitenden Schicht, da hier die Platzierung des Sensors nicht so präzise sein muss. Auch eine ganz nahe Platzierung des Sensors am elektrischen Leiter stellt in diesem Fall keine Gefahr dar, da der Sensor bereits elektrisch isoliert ist und somit auch bei einer nur dünnen elektrisch isolierenden thermisch leitenden ersten Schicht im Bereich zwischen Temperatursensor und elektrischem Leiter die elektrische Durchschlagsfestigkeit sichergestellt werden kann.

Vorteilhafterweise ist außerdem vorgesehen, dass der Temperatursensor bei einer vorgegebenen kritischen Temperatur eine exponentielle Änderung des Widerstandswerts in Abhängigkeit von der Temperatur aufweist. Dies bedeutet, dass der Temperatursensor bei Erreichen einer vorgegebenen kritischen Temperatur besonders stark reagiert und somit ein entsprechend starkes Signal abgibt, sobald die vorgegebene kritische Temperatur überschritten ist. Damit kann ein Überschreiten einer maximal zulässigen vorgegebenen kritischen Temperatur sicher und zuverlässig erfasst werden, indem die Signalstärke ausreichend sichergestellt ist.

Es ist des Weiteren vorgesehen, dass die Vorrichtung ein Stecker einer elektrischen Steckverbindung ist und dass der elektrische Leiter an der Innenseite des Steckers in einem metallenen Steckkontakt endet, welcher zur elektrischen Kontaktierung des Gegenstücks zum Stecker zur Außenseite des Steckers geführt ist. In diesem Fall endet der elektrische Leiter an der Innenseite des Steckers in einem metallenen Steckkontakt, welcher zur Außenseite des Steckers geführt ist, um dort in das Gegenstück des Steckers, wie z. B. eine Steckdose, gesteckt zu werden. Dies bedeutet, dass der Standardaufbau eines elektrischen Steckers, welcher fachlich als Steckerbrücke bezeichnet wird, problemlos verwendet werden kann und somit der Aufbau des Steckers nicht geändert werden muss. Dies vermeidet, wie eingangs schon erwähnt wird, weitere Zertifizierungsprozesse und somit Kosten. Es können bereits im Hochstrombereich zertifizierte und eingesetzte Komponenten weiterverwendet werden, ohne dass am prinzipiellen Aufbau des Steckers Veränderungen vorgenommen werden müssen.

Des Weiteren ist vorgesehen, dass die elektrisch isolierende zweite Schicht aus einer ringförmigen Hülse besteht. Das Vorsehen einer ringförmigen Hülse als zweite elektrisch isolierende Schicht erlaubt eine besonders einfache Herstellung der erfindungsgemäßen Vorrichtung, da in diesem Fall die zweite elektrisch isolierende Schicht in Form einer ringförmigen Hülse stabilisierend wirkt. Dies ist insbesondere dann wichtig, wenn die erste elektrisch isolierende und thermisch leitende Schicht aus einem aushärtenden Fluid hergestellt wird, da dann dieses aushärtende Fluid in die ringförmige Hülse der elektrisch isolierenden zweiten Schicht eingegossen werden kann und von dieser bis zum Aushärten in Form gehalten wird. Die hülsenförmige elektrisch isolierende zweite Schicht kann dann nach dem Aushärten der elektrisch isolierenden und thermisch leitenden ersten Schicht mit der äußeren dritten Schicht im Spritzgussverfahren vergossen werden. Auf diese Art und Weise entsteht schnell und einfach und preiswert eine elektrische Steckverbindung, deren Temperatur schnell und zuverlässig erfasst werden kann und somit einen sicheren Anschluss für Elektroautos darstellt.

Die vorliegende Erfindung wird nachfolgend anhand mehrerer Figuren näher beschrieben und erläutert. Es zeigen:
- Figur 1: eine erfindungsgemäße Vorrichtung bestehend aus einem elektrischen Leiter, welcher einen Temperatursensor und drei erfindungsgemäße Schichten aufweist,
- Figur 2: eine erfindungsgemäße Vorrichtung in Form eines elektrischen Steckers mit zwei Leitern und einem Schutzleiter,
- Figur 3: eine erfindungsgemäße Vorrichtung bestehend aus einem Leiter und einem Temperatursensor, welche von einem Leitband umgeben sind,
- Figur 4: eine erfindungsgemäße Vorrichtung in Form eines Steckers mit zwei Leitern und einem Schutzleiter, wobei die Leiter jeweils von einem Leitband umgeben sind,
- Figur 5: eine erfindungsgemäße Vorrichtung, wobei die erste thermisch leitende und elektrisch isolierende Schicht aus einem ausgehärteten Thermofluid besteht und
- Figur 6: ein Schaubild, welches die vom elektrischen Leiter abgestrahlte und vom Temperatursensor erfasste Temperatur über der Zeit zeigt.

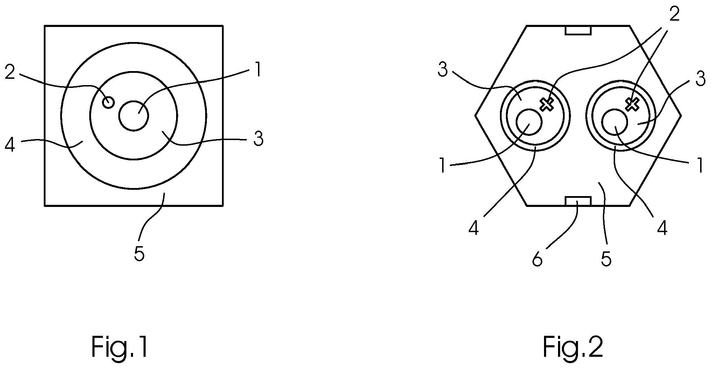

In Figur 1 ist beispielhaft der elektrische Leiter 1 z.B. eines Stromkabels oder eines Steckers abgebildet, wobei der elektrische Leiter 1 mit einer ersten Schicht 3 umgeben ist, welche gleichzeitig elektrisch isolierend und thermisch leitend ausgebildet ist. Um diese erste Schicht 3 herum existiert eine zweite elektrisch isolierende und zugleich thermisch isolierende Schicht 4, welche wiederum von einer äußeren dritten Schicht 5 umgeben ist, welche das Kabel gegenüber der Umwelt abschließt. Diese dritte äußere Schicht 5 muss weder elektrisch isolierend noch thermisch isolierend sein und kann ausschließlich nach den Designvorgaben zur Gestaltung des Äußeren des Kabels oder Steckers ausgestaltet sein. Innerhalb der elektrisch isolierenden und thermisch leitenden ersten Schicht 3 ist ein Temperatursensor 2 angeordnet, welcher die Temperatur des elektrischen Leiters 1 erfasst. Dies geschieht dadurch, dass bei Erwärmung des elektrischen Leiters 1 die Wärme über die elektrisch isolierende und thermisch leitende Schicht 3 auf den Temperatursensor 2 übertragen wird. Da die erste Schicht 3 thermisch leitend ist, erreicht den Temperatursensor 2 die Erwärmung des elektrischen Leiters 1 ohne großen Verzug und ohne große Dämpfung. Gleichzeitig ist die erste Schicht 3 elektrisch isolierend ausgebildet, um elektrische Durchschläge des elektrischen Leiters 1 nach außen und auf den Temperatursensor 2 zu vermeiden. Die zweite Schicht 4 ist ebenfalls elektrisch isolierend aber gleichzeitig thermisch isolierend ausgebildet, so dass die Wärme des elektrischen Leiters 1 nur wenig an das Äußere des Kabels oder Steckers abgegeben wird. Auf diese Art und Weise wird vermieden, dass die außen liegende dritte Schicht 5 über das zulässige Maß hinaus erwärmt wird. Die äußere dritte Schicht 5 kann im Spritzgussverfahren aufgebracht werden oder kann eine herkömmliche Kabelummantelung sein.

In Figur 2 wird die vorliegende Erfindung auf den Stecker eines Kabels angewendet. Hier sind die beiden Leiter 1 ebenfalls jeweils mit einer elektrische isolierenden und thermisch leitenden ersten Schicht 3 umgeben, wobei jeweils ein Temperatursensor 2 in dieser ersten Schicht 3 enthalten ist. Um diese erste Schicht 3 herum ist jeweils eine elektrisch isolierende und thermisch isolierende zweite Schicht 4 angeordnet, welche die Wärmeabstrahlung des Leiters 1 nach außen jeweils begrenzt. Drumherum befindet sich das Steckergehäuse 5, welches wiederum im Spritzgussverfahren ausgeführt sein kann. Das Steckergehäuse 5 trägt an der oberen und unteren Seite außerdem eine Aussparung zur Aufnahme eines Schutzleiters 6.

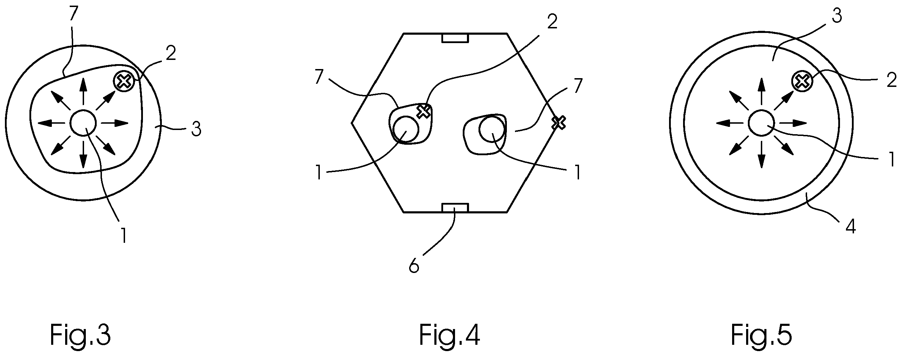

In Figur 3 ist eine Möglichkeit dargestellt, wie die elektrisch isolierende und thermisch leitende erste Schicht 3 ausgeführt sein kann. Dabei besteht diese aus einem Wärmeleitband aus SIL-PAD-Material, welches die vom elektrischen Leiter 1 abgestrahlte Wärme aufnimmt und an den Temperatursensor 2, welcher das Wärmeleitband berührt, überträgt. Das Wärmeleitband ist dabei als Wärmeleitbandschlauch 7 ausgeführt.

Die Ausführungsform aus Figur 4 in einem Kabel lässt sich auch auf einen elektrischen Stecker übertragen, wobei auch hier die erste elektrisch isolierende und thermisch leitende Schicht 3 als Wärmeleitbandschlauch 7 ausgeführt ist und jeweils um den elektrischen Leiter 1 herum angeordnet ist. Am Leitbandschlauch 7 ist jeweils ein Temperatursensor 2 angeordnet, welche die vom Wärmeleitbandschlauch 7 aufgenommene Wärme erfasst.

Die Ausführungsform gemäß Figur 5 zeigt am Beispiel eines Kabels auf, wie die elektrisch isolierende und thermisch leitende erste Schicht 3 hergestellt werden kann. Diese Ausführungsform ist selbstverständlich auch auf dem Stecker in Figur 2 anwendbar. In Figur 5 besteht die elektrisch isolierende und thermisch leitende erste Schicht 3 aus einem Thermofluid, welches im warmen Zustand um den elektrischen Leiter 1 herum gegossen wird. Dies geht besonders gut, wenn die elektrisch isolierende und thermisch isolierende zweite Schicht 4 als Hülse ausgebildet ist, welche um den elektrischen Leiter 1 herum angeordnet ist. In diesem Fall wird die Hülse der zweiten Schicht 4 mit dem warmen Thermofluid ausgegossen, welches nach Aushärtung die erste Schicht 3 bildet. Vor der Aushärtung wird in das Fluid der ersten Schicht 3 der Temperatursensor 2 eingebracht und beim Aushärten fixiert. Auf diese Art und Weise kann die erfindungsgemäße Vorrichtung bestehend aus den beiden Schichten 3, 4 einfach und kostengünstig hergestellt werden. Das Thermofluid besteht dabei aus einem Material, welches elektrisch isolierend und thermisch gut leitend ist und somit die Wärme des elektrischen Leiters 1 möglichst ungehindert an den Temperatursensor 2 überträgt.

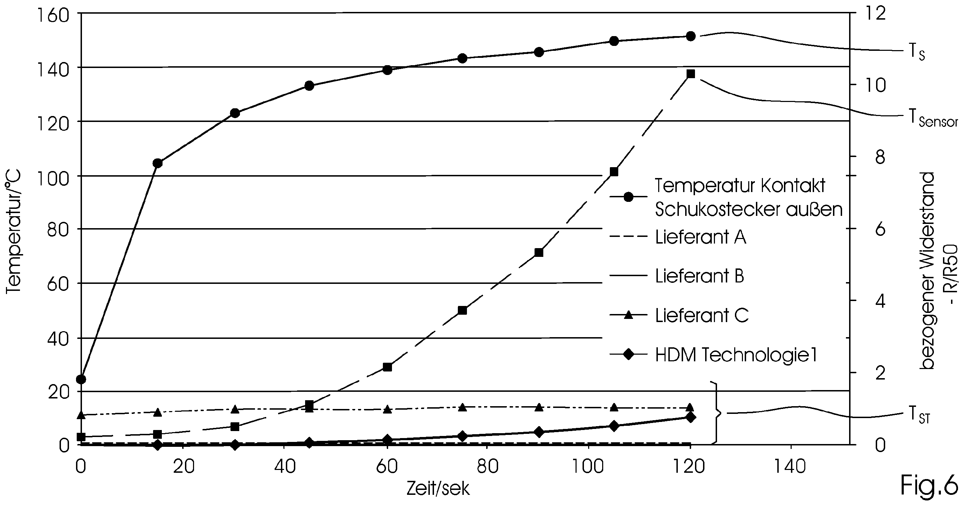

In Figur 6 ist ein Diagramm dargestellt, welches die Veränderung der Temperatur über der Zeit zeigt. Ganz oben ist die Temperatur T_{S} am äußeren Kontakt des Steckers dargestellt, wobei das Überschreiten einer zulässigen Temperatur eine entsprechende Gefahr für den Benutzer darstellt. Es ist zu erkennen, dass die Temperatur T_{S} am Stecker relativ schnell ansteigt und sich dann asymptotisch der maximalen Temperatur nähert. Die Linie darunter beschreibt den Temperaturverlauf T_{Sensor} über der Zeit am Temperatursensor 2. Es ist zu erkennen, dass dieser anfangs ebenfalls verzögert reagiert, aber dann nach etwa 60 Sekunden ziemlich schnell eine ähnliche Temperatur erfasst, welche der tatsächlichen Temperatur am Stecker T_{S} entspricht. Zum Vergleich sind weitere Kennlinien von Steckern mit Temperatursensoren 2 auf dem bisherigen Stand der Technik abgebildet, wobei bei diesen Kennlinien T_{ST} zu erkennen ist, dass diese mit einer geringen Änderung der Spannung auf den Anstieg der Außentemperatur am Stecker T_{S} reagieren, während die erfindungsgemäße Vorrichtung einen starken Anstieg der Temperatur T_{Sensor} im Temperatursensor 2 entsprechend zur tatsächlichen Temperatur am Stecker T_{S} ermöglicht. Dies bedeutet, dass die vorliegende Erfindung eine wesentlich exaktere Erfassung der Temperatur am Stecker im Vergleich zum Stand der Technik ermöglicht und somit die Sicherheit durch Erfassung der tatsächlichen Temperaturerhöhung wesentlich verbessert werden kann.

### Bezugszeichenliste

- 1: elektrischer Leiter
- 2: Temperatursensor
- 3: elektrisch isolierende, thermisch leitende erste Schicht
- 4: elektrisch isolierende, thermisch isolierende zweite Schicht
- 5: äußere dritte Schicht
- 6: Schutzleiter
- 7: Leitbandschlauch
- T_{S}: Außentemperatur am Stecker
- T_{Sensor}: vom Sensor erfasste Temperatur
- T_{ST}: vom Sensor nach dem Stand der Technik erfasste Temperatur

## Patentansprüche

1. Vorrichtung zum Leiten elektrischer Energie mittels eines elektrischen Leiters (1), welcher von wenigstens einer elektrisch isolierenden zweiten Schicht (4) umgeben ist, sowie mit wenigstens einem Temperatursensor (2) zur Erfassung der Temperatur des elektrischen Leiters (1), wobei der Temperatursensor (2) zwischen dem elektrischen Leiter (1) und der elektrisch isolierenden zweiten Schicht (4) angeordnet ist,
**dadurch gekennzeichnet,**
**dass** sich im Zwischenraum zwischen der elektrisch isolierenden zweiten Schicht (4) und dem elektrischen Leiter (1) eine elektrisch isolierende und thermisch leitende erste Schicht (3) befindet und dass der Temperatursensor (2) innerhalb dieser elektrisch isolierenden und thermisch leitenden ersten Schicht (3) angeordnet ist.

2. Vorrichtung nach Anspruch 1,
**dadurch gekennzeichnet,**
**dass** um die elektrisch isolierende zweite Schicht (4) und die elektrisch isolierende und thermisch leitende erste Schicht (3) eine äußere dritte Schicht (5) herum angeordnet ist.

3. Vorrichtung nach Anspruch 1 oder 2,
**dadurch gekennzeichnet,**
**dass** zumindest die äußere dritte Schicht (5) im Spritzgussverfahren aufgebracht wird.

4. Vorrichtung nach einem der vorhergehenden Ansprüche,
**dadurch gekennzeichnet,**
**dass** die elektrisch isolierende zweite Schicht (4) zusätzlich auch thermisch isolierend ist.

5. Vorrichtung nach einem der vorhergehenden Ansprüche,
**dadurch gekennzeichnet,**
**dass** der Temperatursensor (2) ein PTC-Element oder NTC-Element ist.

6. Vorrichtung nach einem der vorhergehenden Ansprüche,
**dadurch gekennzeichnet,**
**dass** die elektrisch isolierende und thermisch leitende erste Schicht (3) aus einem aushärtenden Fluid, insbesondere Gap-Filler 4000, besteht.

7. Vorrichtung nach einem der Ansprüche 1 bis 5,
**dadurch gekennzeichnet,**
**dass** die elektrisch isolierende und thermisch leitende erste Schicht (3) aus einem Wärmeleitband, insbesondere einem Wärmeleitband aus Gap-Pad 5000 Material, besteht.

8. Vorrichtung nach einem der vorhergehenden Ansprüche,
**dadurch gekennzeichnet,**
**dass** der Temperatursensor (2) zusätzlich eine eigene elektrische Isolierung aufweist.

9. Vorrichtung nach einem der vorhergehenden Ansprüche,
**dadurch gekennzeichnet,**
**dass** der Temperatursensor (2) bei einer vorgegebenen kritischen Temperatur eine exponentielle Änderung des Widerstandswerts in Abhängigkeit von der Temperatur aufweist.

10. Vorrichtung nach einem der vorhergehenden Ansprüche,
**dadurch gekennzeichnet,**
**dass** die Vorrichtung ein Stecker einer elektrischen Steckverbindung ist und dass der elektrische Leiter (1) an der Innenseite des Steckers in einem metallenen Steckkontakt endet, welcher zur elektrischen Kontaktierung des Gegenstücks zum Stecker zur Außenseite des Steckers geführt ist.

11. Vorrichtung nach einem der vorhergehenden Ansprüche,
**dadurch gekennzeichnet,**
**dass** die elektrisch isolierende zweite Schicht (4) aus einer ringförmigen Hülse besteht.

## Claims

1. Device for conducting electrical energy by means of an electrical conductor (1) that is surrounded by at least one electrically insulating second layer (4), comprising at least one temperature sensor (2) for determining the temperature of the electrical conductor (1), the temperature sensor (2) disposed between the electrical conductor (1) and the electrically insulating second layer (4),
**characterized in**
**that** an electrically insulating and thermally conductive first layer (3) is provided in the space between the electrically insulating second layer (4) and the electrical conductor (1) and the temperature sensor (2) is disposed within this electrically insulating and thermally conductive first layer (3).

2. Device according to Claim 1,
**characterized in**
**that** an outer third layer (5) is disposed about the electrically insulating second layer (4) and the electrically insulating and thermally conductive first layer (3).

3. Device according to Claim 1 or 2,
**characterized in**
**that** at least the outer third layer (5) is applied in an injection moulding process.

4. Device according to any one of the preceding claims,
**characterized in**
**that** the electrically insulating second layer (4) additionally has thermal insulation properties.

5. Device according to any one of the preceding claims,
**characterized in**
**that** the temperature sensor (2) is a PTC element or an NTC element.

6. Device according to any one of the preceding claims,
**characterized in**
**that** the electrically insulating and thermally conductive first layer (3) consists of a curing fluid, in particular Gap Filler 4000.

7. Device according to any one of claims 1 to 5,
**characterized in**
**that** the electrically insulating and thermally conductive first layer (3) consists of a thermally conductive tape made of Gap Pad 5000 material.

8. Device according to any one of the preceding claims,
**characterized in**
**that** the temperature sensor (2) additionally has an electrical insulation of its own.

9. Device according to any one of the preceding claims,
**characterized in**
**that** at a defined critical temperature, the temperature sensor (2) exhibits an exponential change of the resistance value as a function of the temperature.

10. Device according to any one of the preceding claims,
**characterized in**
**that** the device is a plug of an electrical plug connection and at the inside of the plug, the electrical conductor (1) ends in a metal plug contact guided to the outside of the plug for electrical contact with the counterpart of the plug.

11. Device according to any one of the preceding claims,
**characterized in**
**that** the electrically insulating second layer (4) consists of an annular sleeve.

## Revendications

1. Dispositif pour la conduction de l'énergie électrique au moyen d'un conducteur électrique (1) qui est entouré d'au moins une seconde couche électriquement isolante (4), ainsi qu'au moins un capteur thermique (2) pour la saisie de la température du conducteur électrique (1), le capteur thermique (2) étant disposé entre le conducteur électrique (1) et la seconde couche électriquement isolante (4),
**caractérisé en ce**
**qu'**une première couche électriquement conductrice et électriquement isolante (3) se trouve entre la seconde couche (4) électriquement isolante et le conducteur électrique (1) et que le capteur thermique (2) est disposé à l'intérieur de cette première couche (1) électriquement isolante et thermiquement isolante.

2. Dispositif selon la revendication 1
**caractérisé en ce**
**qu'**une troisième couche extérieure (5) est disposée autour de la seconde couche électriquement isolante (4) et la première couche électriquement isolante et conductrice thermiquement.

3. Dispositif selon la revendication 1 ou 2
**caractérisé en ce**
**qu'**au moins la troisième couche externe (5) est appliquée dans un procédé de moulage par injection.

4. Dispositif selon l'une des revendications précédentes,
**caractérisé en ce**
**que** la seconde couche électriquement isolante (4) est également thermiquement isolante en supplément.

5. Dispositif selon l'une des revendications précédentes,
**caractérisé en ce**
**que** le capteur thermique (2) est un élément PTC ou NTC.

6. Dispositif selon l'une des revendications précédentes,
**caractérisé en ce**
**que** la première couche électriquement conductrice et électriquement isolante (3) se compose d'un fluide durcissable, en particulier de Gap-Filler 4000.

7. Dispositif selon l'une des revendications 1 à 5,
**caractérisé en ce**
**que** la première couche électriquement conductrice et électriquement isolante (3) se compose d'une bande thermo-conductrice en particulier d'une bande thermo-conductrice en matériau Gap-Pad 5000.

8. Dispositif selon l'une des revendications précédentes,
**caractérisé en ce**
**que** le capteur thermique (2) présente en supplément une propre isolation électrique.

9. Dispositif selon l'une des revendications précédentes,
**caractérisé en ce**
**que** le capteur thermique (2) présente une modification exponentielle de la valeur de résistance en fonction de la température en présence d'une température critique prescrite.

10. Dispositif selon l'une des revendications précédentes,
**caractérisé en ce**
**que** le dispositif est un connecteur d'une connexion électrique et que le conducteur électrique (1) se termine sur la face interne du connecteur dans un contact métallique lequel est guidé vers la face externe du connecteur pour la mise en contact électrique de la pièce opposée du connecteur.

11. Dispositif selon l'une des revendications précédentes,
**caractérisé en ce**
**que** la seconde couche électriquement isolante (4) se compose d'une gaine circulaire.
